# EUROPEAN PATENT APPLICATION

(11) **EP 2 674 020 A1**
(43) Date of publication of application: **18.12.2013**
(21) Application number: 12172240.9
(22) Date of filing: 15.06.2012
(51) Int. Cl.: A01D 17/10, A01D 17/06

(54) **Potato digger and use thereof**

(71) Applicant: AVR, 8800 Roeselare (BE)
(72) Inventor: Top, Stefan, 8980 Zonnebeke (BE)
(74) Representative: Duyver, Jurgen Martha Herman

(57) **Abstract**

Potato digger, wherein the potato digger comprises an active cleaning unit (35) in between a sieving belt (7) and a further transport installation (37), transporting and actively cleaning the potatoes from the sieving belt (7) to the further transport installation (37), the active cleaning unit (35) being positioned substantially under the haulm-removing belt (13) for receiving at least part of the potatoes falling through the haulm-removing belt (13).

## Description

The current invention relates to a potato digger according to the preamble of the first claim.

The present invention also relates to the use of the potato digger according to the invention.

Such potato diggers are already known to the person skilled in the art. The potato digger according to BE 1014402 A3 for example comprises at least one digging unit formed by a digging share and corresponding lateral discs and a depth regulating device such as a ridge follower. The potato digger further comprises a sieving belt for receiving and transporting potatoes digged by the digging unit and sieving out soil from the potatoes digged by the digging unit. The sieving belt is provided to rotate in a predetermined direction to transport the potatoes along a transporting direction and comprises at least one sloping part which is directed upwards in the predetermined direction of rotation. A coarse-meshed haulm-removing belt is mounted in such a way that it is provided to rotate around the sieving belt, likewise in the abovementioned direction of rotation. A further transport installation is provided for receiving the potatoes from the sieving belt. Furthermore, the sieving belt is provided for transporting the potatoes from the sieving belt towards a further location, a bin, along the transporting direction. The further transport installation comprises a studded belt positioned substantially under the haulm-removing belt. The studded belt is provided to rotate along the abovementioned direction of rotation for further transporting the potatoes along the transporting direction from under the haulm-removing belt. The studded belt comprises a potato directing element slantedly placed over the studded belt such that potatoes are pushed laterally off the studded belt along the transporting direction.

However, it has been found that although such a potato digger works well in one type of soil, such potato digger is less performing in other types of soil. For example, when the soil is relatively wet, the potatoes leaving the potato digger still have some dirt on or among them.

Therefore, it is an object of the current invention to allow the potato digger to be used in different types of soil in wet and dry conditions still performing at a relatively high capacity.

This is achieved according to the potato digger according to the characterizing part of the first claim.

Thereto, the potato digger comprises an active cleaning unit in between the sieving belt and the further transport installation, transporting and actively cleaning the potatoes from the sieving belt to the further transport installation, the active cleaning unit being positioned substantially under the haulm-removing belt for receiving at least part of the potatoes falling through the haulm-removing belt.

In the context of the current application, with active cleaning unit is meant, a unit provided for cleaning potatoes by interacting with the potatoes and thereto comprising cleaning elements with a specifically designed shape and/or subjecting the cleaning elements to a specific motion. By way of an example a sieving mat and a studded belt are not considered as active cleaning units.

Examples of such active cleaning units are for example a set of rolling cylindrical bodies positioned parallel next to each other. The set of rolling cylindrical bodies can be positioned with their longitudinal axes along the predetermined direction and/or the set of rolling cylindrical bodies are positioned with their longitudinal axes crossing the predetermined direction. Adjacent rolling bodies of the set of rolling cylindrical bodies can have opposing rotating directions and/or adjacent rolling bodies of the set of rolling cylindrical bodies can have equal rotating directions. At least part of the cylindrical bodies can comprise a protrusion such as for example a helical flight wound around the surface of the cylindrical bodies. Although all cylindrical rolling bodies may comprise such a flight, preferably, only every other cylindrical rolling body can comprise such flight.

As the active cleaning unit is positioned substantially under the haulm-removing belt for receiving at least part of the potatoes falling through the haulm-removing belt and in between the sieving belt and the further transport installation, the length of the haulm-removing belt can be increased with respect to the potato digger according to the state of the art, for example as described in BE 1014402 A3. Therefore, the separation of the digged potatoes from unwanted materials, such as haulm, is further improved even over the already present by the active cleaning itself.

Moreover, it has been found that such an active cleaning unit, especially a modular active cleaning unit, allows the potato digger to be adapted to different types of soil as a specific active cleaning unit can be used depending on the type of soil due to the modularity of the cleaning unit. For example, under dry circumstances an active cleaning unit can be used which is specifically adapted to such dry types of soil whereas under wet circumstances an active cleaning unit can be used which is specifically adapted to such wet types of soil.

In addition, although an active cleaning unit was added to the potato digger it can be avoided that potatoes need to undergo additional changes in direction, increasing the risk for bruises on the potatoes.

According to preferred embodiments of the current invention, the potato digger comprises a bin at one side of a wheeled supporting axle, the further transport installation is provided for transporting the potatoes from the sieving belt towards the bin and the active cleaning unit is positioned substantially at the other side of the wheeled supporting axle. It has been found that by positioning the active cleaning unit at the other side of the wheeled supporting axis, the bin can remain positioned relatively close to the wheeled supporting axle improving the stability of the potato digger.

According to preferred embodiments of the potato digger according to the present invention, the further transport installation comprises a subsequent belt rotating along a direction crossing the abovementioned direction of rotation and subsequent to the prior studded belt.

According to further preferred embodiments of the potato digger according to the present invention, the subsequent belt comprises further directing elements extending over the subsequent belt in such a slanting position that the respective elements push the potatoes laterally with respect to the subsequent belt further along the transporting direction towards a sorting table for transporting the potatoes to the further location. According to preferred embodiments of the potato digger according to the invention, the subsequent belt is a studded belt such that the further directing elements push the potatoes laterally with respect to the subsequent studded belt further along the transporting direction towards a sorting table for transporting the potatoes to the further location. It has been found that in such configuration the directional changes of the potatoes along the transport direction can be kept low and can be limited more specifically to two, for example one at each of the potato directing elements.

The invention also relates to the use of the potato digger according to the current invention.

The invention will be further elucidated by means of the following description and the appended figures.
Figures 1 shows a side view of a preferred embodiment of a potato digger according to the present invention.
Figure 2 shows a top view of the potato digger according to figure 1.

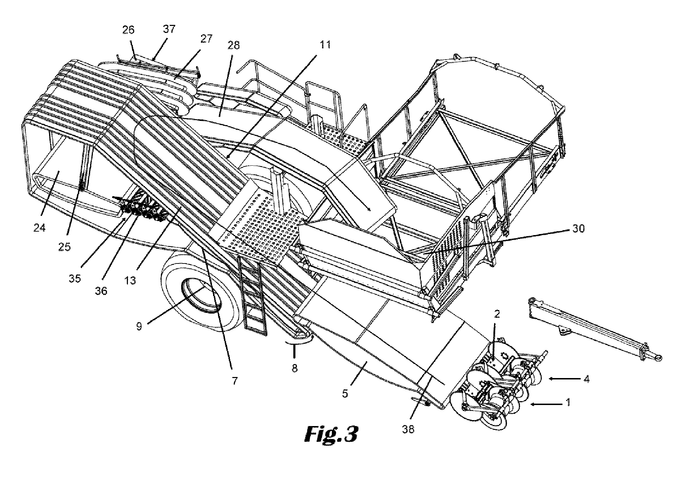

Figure 3 shows a view in perspective of the potato digger according to figure 1.

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present invention. While the present invention will be described with respect to particular embodiments and with reference to certain drawings, the invention is not limited hereto. The drawings included and described herein are schematic and are not limiting the scope of the invention. It is also noted that in the drawings, the size of some elements may be exaggerated and, therefore, not drawn to scale for illustrative purposes.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

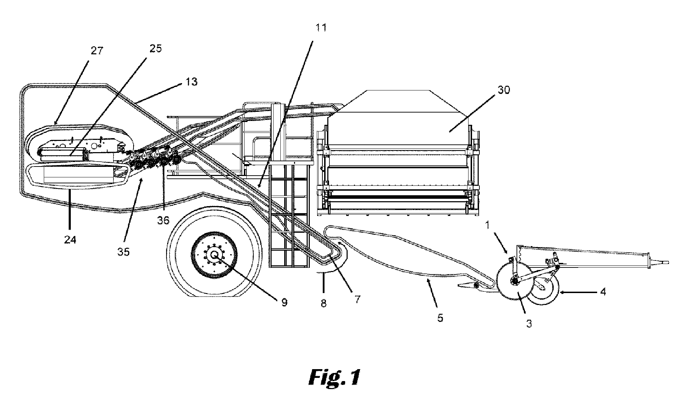

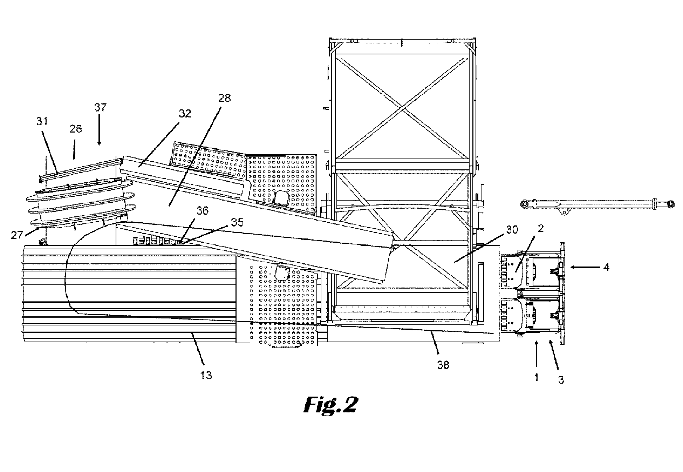

The potato digger according to the invention illustrated diagrammatically in Figures 1 and 2 is a drawn potato digger, of which the general design, with a chassis, wheels and drive systems of the various sieving belts and/or conveyor belts, is known per se, and will therefore not be described in any further detail here. Instead of being of a design that is drawn as shown in the figures, the potato digger may also be self-propelled. The potato digger may further be suitable not only for digging potatoes, but may also or, provided that some slight adjustments are made, be suitable for digging other crops such as carrots, or for picking up onions and the like.

The potato digger illustrated is provided with a digging unit 1, for example but not critically formed by a digging share or digging blade 2 and corresponding lateral discs 3 and a depth regulating device such as a ridge follower 4. If desired, the potato digger may be provided with two or more of such digging units.

The digging share 2 as shown in the figures is preferably, but not necessarily, followed by a first upwardly slanting fine-meshed sieving belt or sieving belt 5, for sieving out soil from the potatoes digged by the digging unit 1. The first sieving belt preferably is guided around rollers both at its bottom end and at its top end.

For the sake of simplicity, these rollers, which are known per se, have not all been shown in the figures. The sieving belt 5 is preferably composed of interconnected transverse bars with a rod, such as a metal rod, plastic rods, etc., which can sometimes be clad with rubber or another elastic synthetic material. This first sieving belt 5 in practice is known as the digging belt.

Connecting to the top end of the first sieving belt 5 is a second sieving belt 7, which is constructed in the same way as the first sieving belt 5, and which is also guided around rollers at the bottom and at the top. Said second sieving belt 7 rotates in the same direction as the first sieving belt 5, more particularly in the direction of the arrow 8. If desired, one or more further sieving belts may be provided between the digging belt 5 and the second sieving belt 7.

The second sieving belt 7 comprises at least one sloping part 11 which is directed upwards in the predetermined direction of rotation. That sloping part 11 of the second sieving belt 7 is directed upwards at an angle that preferably is greater than 20°, but less than 40°, in the direction of rotation 8 of said sieving belt. The angle is preferably greater than 30°, in particular greater than 32°, and less than 38°, the greatest preference being for an angle of 33° to 37°. Through this choice of the angle of inclination, the digged potatoes can be taken more quickly to the required height, the machine can be of a construction that is shorter and cheaper, and larger wheels 9 can also be provided, if desired. Possibly, although not shown in the figures, towards the top end of the second sieving belt 7, an optional bend is provided in said sieving belt, the bottom, steep part of the second sieving belt 7 forming an angle of approximately 35°, while the top, less steep part of said sieving belt forms an angle of approximately 15°.

In order to separate the haulm from the digged potatoes, a haulm-removing belt 13 is mounted in the machine according to the invention in such a way that it rotates around the second sieving belt 7, in the same direction of rotation 8 as said second sieving belt 7, and preferably in such a way that the haulm-removing belt 13 preferably extends at least over a part of its width between the first and the second sieving belts. Said haulm-removing belt 13 is a coarse-meshed barred belt, on which the haulm remains lying, but through which the potatoes fall. In the potato digger according to the invention, said haulm-removing belt is provided not only for separating out and removing the large haulm parts, but also for preventing uncontrolled rolling back of the potatoes on the preferred steep part 11 of the second sieving belt 7. For this purpose, in the steep part 11 of the second sieving belt 7 said haulm-removing belt 7 preferably is guided so closely against said sieving belt 7 that the potatoes, or at any rate the larger potatoes, cannot roll down between the haulm-removing belt and the second sieving belt.

Notwithstanding the fact that in the potato digger according to the invention uncontrolled rolling back of the potatoes on the second sieving belt is prevented, uncontrolled rolling back of the potatoes on said sieving belt is preferably still possible, this being in order to obtain a greater cleaning effect. The fact is that the drives of the second sieving belt and the haulm-removing belt are preferably designed to make the second sieving belt rotate at a speed that is equal to 1 to 1.4 times the speed of rotation of the haulm-removing belt. By making the second sieving belt rotate at a greater speed than that of the haulm-removing belt, it is ensured that the potatoes roll along the second sieving belt, but not too rapid or, in other words, uncontrolled rolling back of the larger potatoes is prevented by the haulm-removing belt. The speed of rotation of said haulm-removing belt in fact determines the speed at which the potatoes will be conveyed upwards along the second sieving belt.

A possible embodiment of the haulm-removing belt 13 is for example shown and described in BE1014402. The haulm-removing belt 13 illustrated in BE1014402 is for example formed by two lateral toothed belts, between which transverse bars are provided. Said transverse bars are formed by a central rod, for example a metal rod or a plastic rod, around which an elastic - in particular a rubber - cladding is provided. Two types of rubber projections, with a mutual spacing of approximately 20 cm, are formed on the transverse bars. The first type of projections are provided with an aperture, through which a longitudinal cord can be passed, while a recess is provided below the second type of projections, in the rubber cladding of the bars, for the purpose of fitting longitudinal straps. Said straps and the cords are designed to work with the bars themselves to collect the haulm. The projections then help to ensure that the haulm that has been collected is pulled along by the haulm-removing belt.

In the haulm-removing belts 13 the projections are for example situated at a mutual distance of at least 8 cm, and in particular at a mutual distance of at least 10 cm. However owing to this relatively great mutual distance, said projections often cannot prevent potatoes on the second sieving belt 7 from rolling back in an uncontrolled manner, in other words past the transverse bars of the haulm-removing belt.

According to a preferred embodiment, uncontrolled rolling back of the potatoes through the transverse bars themselves of the haulm-removing belt 13 is prevented by the fact that said transverse bars are disposed at a sufficiently great distance from the second sieving belt, in such a way that they themselves project to a sufficient height above the second sieving belt. In particular, said transverse bars are disposed at a distance greater than 2 cm, and preferably at a distance of at least 3, and more particularly at a distance of at least 4 cm, from the second sieving belt. This distance is preferably variable, in particular at least from 2.5 to 9 cm, and more preferably at least from 4 to 8 cm, such as for example 7 cm, in such a way that said distance can be set at the best value established experimentally. In this case it is possible in practice for the distance between the bars of the haulm-removing belt 13 and the top surface of the second sieving belt 7 to be greater than the smallest potatoes being conveyed along the sieving belt, since these small potatoes have less of a tendency to roll back and, if they do roll back, they are retained by larger potatoes, and in particular also by haulm that remains adhering to the bars of the haulm-removing belt.

In order to prevent uncontrolled rolling back of the potatoes, the transverse bars of the haulm-removing belt 13 need not be exceptionally high. The height of said bars may in particular be less than 4.5 cm, and more particularly may even be less than 3.5 cm.

Instead of preventing the uncontrolled rolling back purely by means of the transverse bars, it is also possible, if desired, to provide additional projections on said bars. In order to produce as simple and cheap a design of haulm-removing belt as possible, and in order to limit the adherence of soil as much as possible, it is, however, preferable to provide as few projections as possible. In this respect it is also important according to the invention to ensure that any projections project over a distance of no more than 4 cm from the surface formed by the transverse bars of the haulm-removing belt, and that this is both above the top surface and possibly also below the bottom surface.

Another preferred feature of the potato digger is that the height of the part of the width , preferably of the transverse bars if present, of the haulm-removing belt that extends between the first and the second sieving belt is less than 8 cm, in particular less than 7 cm, and preferably even less than 6 cm. This is possible by providing no projections on the transverse bars of the haulm-removing belt, or by providing only bars of a limited height. The advantage of such a "thin" haulm-removing belt is that the height of fall at the transition between the first and the second sieving belts can be limited, and also that the haulm-removing belt can be produced in a simpler and therefore cheaper manner. A further advantage of the limited height that the haulm-removing belt projects above the second sieving belt is that at the transition between the first and the second sieving belts the potatoes in their fall will entrain less haulm, so that the haulm will be collected and removed more efficiently by the haulm-removing belt.

The potato digger shown in the figures comprises an active cleaning unit 35 in between the sieving belt 7 and the further transport installation 37 transporting and actively cleaning the potatoes from the sieving belt 7 to the further transport installation 37, the active cleaning unit 35 being positioned substantially under the haulm-removing belt 13 for receiving at least part of the potatoes falling through the haulm-removing belt 13.

The active cleaning unit 35 shown comprises a set of rolling cylindrical bodies 36 parallelly positioned next to each other. The set of rolling cylindrical bodies 36 are positioned with their longitudinal axes along the transporting direction. The set of rolling cylindrical bodies 36 are positioned with their longitudinal axes crossing the predetermined direction, in the case shown even perpendicular to the predetermined direction. Although not shown in the figures, at least part of the cylindrical bodies 36 of the embodiment shown, preferably comprise a protrusion. As discussed above, alternative embodiments are however possible, although not shown in the figures.

In the potato digger according to the invention the active cleaning unit 35 is followed by a belt 24 disposed in line with it and having projections, in particular by a studded belt 24. The studded belt 24 comprises a potato directing element 25 slantedly placed over the studded belt 24 such that potatoes are pushed laterally off the studded belt 24 along the transporting direction 38. The potato directing element 25 preferably is in the form of a set of driven rollers or brushes 25 placed one above the other fitted on the studded belt 24. The rollers or brushes are preferably placed in such a slanting position that they push the potatoes laterally off the studded belt 24, while minor impurities like stones, clods and pieces of haulm are removed under said rollers or brushes 25.

The further transport installation 37 shown in the figures comprises a subsequent belt 26 rotating along a direction crossing the abovementioned direction of rotation and subsequent to the prior studded belt 24. The subsequent belt 26 preferably, as shown in the figures, comprises further directing elements 27 extending over the subsequent belt in such a slanting position that the respective elements push the potatoes laterally with respect to the subsequent belt 26 further along the transporting direction 38 towards a sorting table 28 for transporting the potatoes to the further location 30. The subsequent belt 26 preferably is a studded belt such that the further directing elements 27 push the potatoes laterally with respect to the subsequent studded belt 26 further along the transporting direction 38 towards a sorting table for transporting the potatoes to the further location 30, which preferably is a bin 30.

In the potato digger according to the invention the studded belt 24 can however be followed by various further belts or other transport units of the further transport installation, although not shown in the figures.

Behind or even replacing the rotor cam 27, as shown in the figures or but not necessarily a double rotor cam 27, other potato directing devices such as a set of rollers or brushes, another roller 31 or set of rollers 31 is provided on the transverse studded belt 26. Which rollers for example send the clods that pass underneath the rotor cam to a clod belt 32. On said clod belt 32 any potatoes that have been carried along can still be picked off manually. The minor impurities are again removed under the rollers or brushes 31. Such configuration is however not critical for the invention.

In order to remove from the haulm any potatoes that may still be hanging on said haulm, although not shown, haulm strippers are preferably provided both on the top and on the bottom side of the haulm-removing belt. On the bottom side these haulm strippers are more particularly formed by one or more rollers (amongst which a guide plate may be fitted if desired, so that the stripped potatoes arrive on the studded belt 24 in front of the rollers 25), and on the top are formed by a set of rubber-clad springs. The potatoes detached by these haulm strippers fall either onto the studded belt 24 or on the active cleaning unit 35.

As can be seen from the figures, the potato digger preferably, although not necessarily, comprises a bin 30 at one side of a wheeled supporting axle 9, the further location along the transporting direction 38 preferably being the bin 30 and the active cleaning unit 35 preferably being positioned substantially at the other side of the wheeled supporting axle 9.

It will be clear from the description given above of a special embodiment of the potato digger according to the invention that numerous further modifications can be made to it without going beyond the scope of the appended claims. In particular, the arrangement of the various parts may be changed, or certain belts or cleaning means may be omitted or added digger.

## Claims

1. Potato digger, comprising at least one digging unit (1), a sieving belt (7) for receiving and transporting potatoes digged by the digging unit (1) and sieving out soil from the potatoes digged by the digging unit (1) and is provided to rotate in a predetermined direction (8) to transport the potatoes along a transporting direction (38), the sieving belt (7) comprises at least one sloping part (11) which is directed upwards in the predetermined direction of rotation, a coarse-meshed haulm-removing belt (13) mounted in such a way that it is provided to rotate around the sieving belt (7), likewise in the abovementioned direction of rotation (8), and a further transport installation (37) for receiving and further transporting the potatoes towards a further location (30) along the transporting direction (38), the further transport installation (37) comprising a studded belt (24) positioned substantially under the haulm-removing belt (13) and provided to rotate along the abovementioned direction of rotation (8) for further transporting the potatoes along the transporting direction (38) from under the haulm-removing belt (13), the studded belt (24) comprising a potato directing element (25) being slantedly placed over the studded belt (24) such that potatoes are pushed laterally off the studded belt (24) along the transporting direction (38), **characterized in that** the potato digger comprises an active cleaning unit (35) in between the sieving belt (7) and the further transport installation (37), transporting and actively cleaning the potatoes from the sieving belt (7) to the further transport installation (37), the active cleaning unit (35) being positioned substantially under the haulm-removing belt (13) for receiving at least part of the potatoes falling through the haulm-removing belt (13).

2. Potato digger according to claim 1, **characterized in that** the potato digger comprises a bin (30) at one side of a wheeled supporting axle (9), **in that** the further location along the transporting direction (38) is the bin (30) and **in that** the active cleaning unit (35) is positioned substantially at the other side of the wheeled supporting axle (9).

3. Potato digger according to claim 1 or 2, **characterized in that** the active cleaning unit (35) comprises a set of rolling cylindrical bodies (36) parallelly positioned next to each other.

4. Potato digger according to claim 3, **characterized in that** the set of rolling cylindrical bodies (36) are positioned with their longitudinal axes along the transporting direction (38).

5. Potato digger according to claim 3, **characterized in that** the set of rolling cylindrical bodies (36) are positioned with their longitudinal axes crossing the predetermined direction (8).

6. Potato digger according to claim 3 or 4, **characterized in that** adjacent rolling bodies of the set of rolling cylindrical bodies (36) have opposing rotating directions.

7. Potato digger according to claim 3 or 4, **characterized in that** adjacent rolling bodies of the set of rolling cylindrical bodies (36) have equal rotating directions.

8. Potato digger according to any one of claims 3 - 7, **characterized in that** at least part of the cylindrical bodies (36) comprise a protrusion.

9. Potato digger according to any one of claims 1 - 8, **characterized in that** the further transport installation (37) comprises a subsequent belt (26) rotating along a direction crossing the abovementioned direction of rotation and subsequent to the prior studded belt (24).

10. Potato digger according to claim 9, **characterized in that** the subsequent belt (26) comprises further directing elements (27) extending over the subsequent belt in such a slanting position that the respective elements push the potatoes laterally with respect to the subsequent belt (26) further along the transporting direction (38) towards a sorting table (28) for transporting the potatoes to the further location (30).

11. Potato digger according to claim 9 or 10, **characterized in that** the subsequent belt (26) is a studded belt such that the further directing elements (27) push the potatoes laterally with respect to the subsequent studded belt (26) further along the transporting direction (38) towards a sorting table for transporting the potatoes to the further location (30).

12. Potato digger according to any one of claims 9 - 11, **characterized in that** a rotor cam (27) is provided on the subsequent belt (26).

13. Use of the potato digger according to any one of claims 1 - 12.
